# EUROPÄISCHE PATENTSCHRIFT

(11) **EP 2 427 300 B1**
(45) Veröffentlichungstag und Bekanntmachung des Hinweises auf die Patenterteilung: **10.07.2013**
(21) Anmeldenummer: 10719275.9
(22) Anmeldetag: 25.03.2010
(51) Int. Cl.: B23Q 1/00, B23Q 3/12

(54) **WERKZEUGMASCHINE MIT MASCHINENSPINDEL UND WERKZEUGAUFNAHME, MIT EINER KONTAKTSTELLE FÜR ELEKTRISCHE STROM- ODER DATENÜBERTRAGUNG, MASCHINENSPINDEL UND MASCHINENWERKZEUG.**
MACHINE TOOL COMPRISING A MACHINE SPINDLE, A TOOL HOLDER AND A CONTACT POINT FOR ELECTRIC CURRENT OR DATA TRANSMISSION, MACHINE SPINDLE AND MACHINE WORKTOOL
MACHINE-OUTIL DOTÉE D'UNE BROCHE ET D'UN LOGEMENT D'OUTIL, POURVU D'UN POINT DE CONTACT POUR LA TRANSMISSION DE COURANT ÉLECTRIQUE OU DE DONNÉES, BROCHE ET OUTIL.

(30) Priorität: 08.05.2009 DE 102009020509
(43) Veröffentlichungstag der Anmeldung: 14.03.2012
(73) Patentinhaber: Komet Group GmbH, 74354 Besigheim (DE)
(72) Erfinder: BIERL, Wolfgang, 74363 Güglingen (DE); FRONIUS, Jürgen, 74399 Walheim/Neckar (DE); GRAF, Heiko, 70839 Gerlingen (DE); HASSELKUSS, Ewald, 70734 Fellbach (DE); HÖRL, Roland, 74357 Bönnigheim (DE)
(74) Vertreter: Gauss, Nikolai
(86) Internationale Anmeldenummer: PCT/EP2010/053895
(87) Internationale Veröffentlichungsnummer: WO 2010/127908

(56) Entgegenhaltungen:
- EP-A1- 0 718 064
- WO-A1-2006/100451
- DE-U1- 8 529 200

## Beschreibung

Die Erfindung betrifft eine Werkzeugmaschine mit einer um eine Spindelachse drehbaren, eine stirnseitige Werkzeugaufnahme aufweisenden, motorisch angetriebenen Maschinenspindel und einem an der Maschinenspindel auswechselbar angeordneten Maschinenwerkzeug, das ein mit der Werkzeugaufnahme der Maschinenspindel kompatibles Kupplungselement mit einer zur Maschinenspindel weisenden rückwärtigen Fläche aufweist, *und* mit einer *an der* Werkzeugaufnahme *ausgebildeten,* der rückwärtigen Fläche des Kupplungselements gegenüberliegenden Stirnfläche. *Darüber hinaus betrifft die Erfindung eine Maschinenspindel und ein Maschinenwerkzeug für eine solche Werkzeugmaschine.*

*Eine derartige Werkzeugmaschine, eine derartige Maschinenspindel und ein derartiges Maschinenwerlaeug sind aus der* WO 2006/100451 A1 *bekannt.*

*Darüber hinaus sind auch* Werkzeugmaschinen bekannt, *die eine* Maschinenspindel *mit* einer elektrischen Leitung *haben,* über die ein an der Maschinenspindel aufgenommenes Maschinenwerkzeug mit elektrischer Energie versorgt werden kann. Das Maschinenwerkzeug ist mit einem Kupplungselement in einer Werkzeugaufnahme an der Maschinenspindel aufgenommen. Die Werkzeugaufnahme der Maschinenspindel umfasst eine Planfläche. Das Kupplungselement des an der Maschinenspindel aufgenommenen Maschinenwerkzeugs liegt mit einer planen Ringfläche an der Werkzeugaufnahme der Maschinenspindel. Mittels eines Kupplungsmechanismus können die Planfläche und die plane Ringfläche aneinandergepresst werden. Hierdurch entsteht eine Plananlage. An der Planfläche der Maschinenspindel und an der planen Ringfläche der Werkzeugaufnahme ist jeweils ein elektrischer Leitungskontakt vorgesehen. Bei Anschluss des Maschinenwerkzeugs an die an die Maschinenspindel werden diese Kontakte aufgrund Federkraft aneindergedrückt. Die elektrische Leitung in der Maschinenspindel wird dann mit einem Verbraucher im Maschinenwerkzeug verbunden.

Aufgabe der Erfindung ist es, eine Werkzeugmaschine bereitzustellen, die es ermöglicht, auch bei hohen Drehzahlen elektrische Energie und/oder Daten über eine an der Stirnfläche bzw. Planfläche der Maschinenspindel ausgebildete Kontaktstelle in eine Werkzeugaufnahme zuverlässig übertragen, um einen leistungsstarken Verbraucher in einem Maschinenwerkzeug, das sich in der Werkzeugaufnahme befindet, mit Strom zu versorgen, *und eine Maschinenspindel sowie ein Maschinenwerkzeug für eine solche Werkzeugmaschine zu schaffen.*

Diese Aufgabe wird durch eine Werkzeugmaschine *mit den Merkmale des Anspruchs 1, eine Maschinenspindel mit den Merkmale des Anspruchs 18 und ein Maschinenwerkzeug mit den Merkmalen des Anspruchs 19 gelöst.*

*In einer erfindungsgemäßen Werkzeugmaschine kann* das spindelseitige Kontaktelement und das werkzeugseitige Kontaktelement unter der Einwirkung einer beim Drehen der Maschinenspindel um die Spindelachse auftretenden Flie*h*kraftkomponente relativ zueinander bewegt und unter Kontaktbildung gegeneinander *gedrückt werden.*

Der Erfindung liegt die Erkenntnis zugrunde, dass Kontaktstellen bzw. Schnittstellen für die Übertragung von elektrischer Energie von einer Maschinenspindel in ein Maschinenwerkzeug, die elektrische Leitungskontakte an der Kegelaufnahme der Maschinenspindel und am Schaft des Maschinenwerkzeug-Kupplungselements vorsehen, sich nur mit hohem Aufwand zuverlässig betreiben lassen. Dies liegt an den hohen Anpresskräften in diesem Maschinenabschnitt. Außerdem können Leitungskontakte in diesem Maschinenabschnitt nur mit großem Aufwand ausgetauscht bzw. repariert werden, da dieser Maschinenabschnitt nur schwer zugänglich ist.

Eine weitere der Erfindung zugrunde liegende Erkenntnis ist, dass Aufnahmen für elektrische Kontaktelemente an Maschinenspindel und am Kupplungselement des Maschinenwerkzeugs in Bezug auf die Spindelachse vorteilhafterweise schräg angeordnet werden: Dies ermöglicht nicht nur das fliehkraftunterstützte Aneinanderpressen der elektrischen Kontaktelemente. Das schräge Anordnen der Aufnahmen bietet insbesondere die Möglichkeit, vergleichsweise großvolumig Kontaktelemente an der Plan- bzw. Stirnfläche der Maschinenspindel einzusetzen, ohne dass dabei die mechanische Belastbarkeit der Planfläche der Maschinenspindel bzw. einer rückwärtigen Fläche des Kupplungselements, z.B. der planen Ringfläche eines als HSK-Schnittstelle ausgebildeten Kupplungselements des Maschinenwerkzeugs geschwächt wird. Das bedeutet, dass an der Planfläche der Maschinenspindel und der planen Ringfläche des Kupplungselements schräge elektrische Kontaktelemente und Lagereinrichtungen ausgebildet werden können, ohne die Stabilität sowie das Schwingungs- und Torsionsverhalten des von Maschinenspindel und Werkzeugaufnahme mit dem Maschinenwerkzeug gebildeten Verbundwerkzeugs zu beeinträchtigen.

Die rückwärtige Fläche des Kupplungselements kann insbesondere eine das Kupplungselement umgebende plane Ringfläche sein. Die Stirnfläche der Werkzeugaufnahme der Maschinenspindel ist vorzugsweise eine Planfläche. Dann ist die das Kupplungselement umgebende plane Ringfläche beim Kupplungsvorgang gegen die Planfläche der Werkzeugaufnahme unter Bildung einer Plananlage anpressbar.

Das spindelseitige Kontaktelement oder das werkzeugseitige Kontaktelement *sind* unter der Einwirkung der Fliehkraftkomponente in einer Richtung bewegbar, in der sich das werkzeugseitige oder das spindelseitige Kontaktelement befindet, wobei sich der Abstand von der Spindelachse vergrößert.

Das spindelseitige Kontaktelement ist bevorzugt in einer einen spitzen Winkel mit der Spindelachse einschließenden Schrägaufnahme angeordnet, die zur Planfläche der Maschinenspindel hin offen ist. Vorzugsweise beträgt der spitze Winkel 5° bis 45°, besonders günstig ist ein Wert von 20°.

Indem die Schrägaufnahme ausgehend von der Planfläche der Maschinenspindel in einer Richtung verläuft, die von der Spindelachse weg weist, ist es möglich, an der Stirnfläche der Maschinenspindel ein starres elektrisches Kontaktelement vorzusehen und in der besser zugänglichen Werkzeugaufnahme ein bewegliches Kontaktelement anzuordnen.

Das spindelseitige Kontaktelement ist daher vorzugsweise starr in der Maschinenspindel angeordnet. Indem das spindelseitige Kontaktelement eine ebene Kontaktfläche mit einer Kalotte als konvexe Vertiefung hat, wird ein sicherer Eingriff des werkzeugseitigen Kontaktelements in das spindelseitige Kontaktelement gewährleistet.

Indem das spindelseitige Kontaktelement im Bezug auf die Planfläche der Maschinenspindel zurückgesetzt angeordnet ist, wird gewährleistet, dass an die Maschinenspindel auch herkömmliche Kupplungselemente von Maschinenwerkzeugen ohne Kontaktelemente angeschlossen werden können.

Bevorzugt ist das werkzeugseitige Kontaktelement in einer zur planen Ringfläche des Kupplungselements offenen Schrägführung angeordnet. Es zeigt sich, dass das Ausrichten der Schrägführung im Bezug auf die Spindelachse der Maschinenspindel unter einem Winkel zwischen 5° und 45°, vorzugsweise unter einem Winkel von 20° günstig für die Güte des galvanischen Kontakts der Kontaktelemente ist. Hier ist es von Vorteil, wenn die Schrägführung ausgehend von der rückwärtigen Fläche des Kupplungselements des Maschinenwerkzeugs im Bezug auf die Spindelachse mit einer zur Spindelachse weisenden Richtungskomponente verläuft.

Bevorzugt ist das werkzeugseitige Kontaktelement relativ zu der Schrägführung bewegbar. Günstig ist es, das werkzeugseitige Kontaktelement als Kugel auszuführen. Die Kugel kann in einem konischen Käfig geführt werden. Mit einem Federelement wird die Kugel gegen das spindelseitige Kontaktelement gedrückt. Als Federelement kann ein elastischer Körper, z.B. eine Schraubenfeder, eine elastische Kugel oder auch ein die Kugel teilweise umgebender Elastomerkörper vorgesehen werden.

Die Schrägaufnahme an der Werkzeugaufnahme der Maschinenspindel ist zur Planfläche der Maschinenspindel gegen das Eindringen von Flüssigkeit und Schmutz abgedichtet. Für das Abdichten kann insbesondere ein Dichtring vorgesehen werden. Auch die Schrägführung im Kupplungselement im Bereich der rückwärtigen Fläche ist gegen das Eindringen von Flüssigkeit und Schmutz abgedichtet. Als Abdichtung erweist sich auch hier ein in der Schrägführung angeordneter Dichtring als günstig. Ein besonders zuverlässiger Kontakt ist möglich, indem das zweite Kontaktelement als Doppelkontakt ausgebildet ist.

Es ist möglich, auch das werkzeugseitige Kontaktelement im Bezug auf die rückwärtige Fläche des Kupplungselements zurückgesetzt anzuordnen. Dann lässt sich das Maschinenwerkzeug auch an konventionellen Maschinenspindeln betreiben, die keine galvanische Kontaktstelle haben.

Bei der Werkzeugmaschine kann eine weitere, zusätzliche Anschlussstelle für Datenübertragung vorgesehen sein. Diese Anschlussstelle ist für berührungslose Datenübertragung ausgelegt. Damit wird eine Anschlussstelle geschaffen, die nicht für Verschleiß anfällig ist. Die Anschlussstelle für berührungslose Datenübertragung ist z.B. für Datenübertragung mittels Induktion oder mittels kapazitiver Kopplung oder mittels elektromagnetischer Wellen oder für Datenübertragung mittels Licht, insbesondere mittels Laserlicht ausgelegt.

Für die berührungslose Datenübertragung gibt es an der Planfläche der Werkzeugaufnahme der Maschinenspindel eine Aufnahme für ein spindelseitiges Datenübertragungselement. An der rückwärtigen Fläche, z.B. einer planen Ringfläche des Kupplungselements am Maschinenwerkzeug befindet sich entsprechend eine Aufnahme für ein werkzeugseitiges Datenübertragungselement. Indem das spindelseitige Datenübertragungselement in Bezug auf die Planfläche der Werkzeugaufnahme zurückgesetzt angeordnet ist, wird der Betrieb von Maschinenwerkzeugen mit herkömmlichen Kupplungselementen in der Werkzeugmaschine ermöglicht. Die Aufnahme ist bevorzugt eine in die Planfläche der Werkzeugaufnahme eingebrachte Bohrung, die parallel zur Spindelachse verläuft. Das werkzeugseitige Datenübertragungselement ist in einer Aufnahme im Bereich der planen Ringfläche des Kupplungselements des Maschinenwerkzeugs angeordnet, vorzugsweise zurückgesetzt. Die Aufnahme für das zweite Datenübertragungselement ist eine in die plane Ringfläche des Maschinenwerkzeug-Kupplungselements eingebrachte Bohrung, die parallel zur Spindelachse verläuft.

Indem mehrere galvanische Kontaktstellen für die Übertragung von elektrischem Strom oder von Daten zwischen der Maschinenspindel und Maschinenwerkzeug vorgesehen werden, können Maschinenwerkzeuge mit besonders leistungsstarken Verbrauchern betrieben werden bzw. es können sehr große Datenmengen zwischen Maschinenspindel und Maschinenwerkzeug ausgetauscht werden.

Das spindelseitige Kontaktelement kann in einer austauschbaren Leiste an der Maschinenspindel aufgenommen werden. Es ist günstig, auch das werkzeugseitige Kontaktelement in einer entsprechend austauschbaren Haltevorrichtung zu integrieren, die an dem Kupplungselement aufgenommen ist.

Indem der Kontaktstelle für die Übertragung von elektrischer Energie und/oder Daten und der Anschlussstelle für berührungslose Datenübertragung ein Auslass für Blasluft zugeordnet ist, wird ein zuverlässiges Reinigen von Kontakt- und Anschlussstelle bei Verschmutzung ermöglicht. Der Kontaktstelle bzw. Anschlussstelle an der Maschinenspindel kann auch ein Heizelement für das Verdampfen von Fluid zugeordnet werden, um ein Reinigen vor Verschmutzung, insbesondere vor Verschmutzung mit Kühlflüssigkeit zu ermöglichen.

Bevorzugt ist für das spindelseitige Kontaktelement und/oder das werkzeugseitige Kontaktelement eine Lagereinrichtung vorgesehen, die wenigstens teilweise aus Teflon und/oder aus Silikon und/oder aus Gummi besteht.

Das spindelseitige Kontaktelement ist mit einem an oder in der Maschinenspindel verlegten Kabel verbunden. An das werkzeugseitige Kontaktelement ist ein an oder in der Werkzeugaufnahme verlegtes Kabel angeschlossen. Vorzugsweise ist dieses Kabel als Spiralkabel ausgeführt.

In einem rückwärtigen Abschnitt der Maschinenspindel ist eine Schnittstelle zur Übertragung von elektrischer Energie und/oder Daten in die Maschinenspindel vorgesehen.

Im Folgenden wird die Erfindung anhand der in der Zeichnung in schematischer Weise dargestellten Ausführungsbeispiele näher erläutert. Es zeigen
- Fig. 1: eine schematische Ansicht einer Werkzeugmaschine mit Maschinenspindel und Maschinenwerkzeug;
- Fig. 2: einen Schnitt der Maschinenspindel mit angeschlossenem Maschi nenwerkzeug-Kupplu ngselement;
- Fig. 3: eine vergrößerte Ansicht einer Kontaktstelle für Übertragung von elektrischer Energie und/oder Daten im Schnitt aus Fig. 2;
- Fig. 4: eine zweite alternative Ausführung einer Kontaktstelle für Übertragung von elektrischer Energie und/oder Daten von der Maschinenspindel in das Kupplungselement des Maschinenwerkzeugs;
- Fig. 5: bis 7 weitere alternative Ausführungen einer Kontaktstelle für Übertragung von elektrischer Energie und/oder Daten von der Maschinenspindel in das Maschinenwerkzeug;
- Fig. 8: eine vergrößerte Ansicht einer Anschlussstelle für Datenübertragung in dem Schnitt aus Fig. 2;
- Fig. 9: einen Teilschnitt einer alternativen Ausführung einer Maschinenspindel mit angeschlossenem Maschinenwerkzeug-Kupplungselement;
- Fig. 10: einen Schnitt von Maschinenspindel und Maschinenwerkzeug-Kupplungselement entlang der Linie X-X aus Fig. 9;
- Fig. 11: eine vergrößerte Ansicht einer Kontakt- und Anschlussstelle für Übertragung von elektrischer Energie und Daten aus dem Teilschnitt nach Fig. 9;
- Fig. 12: einen Teilschnitt einer weiteren alternativen Ausführung einer Maschinenspindel mit angeschlossenem Maschinenwerkzeug-Kupplungselement;
- Fig. 13: einen Schnitt von Maschinenspindel und Maschinenwerkzeug-Kupplungselement entlang der Linie XIII-XIII aus Fig. 12; und
- Fig. 14: eine vergrößerte Ansicht einer Kontakt- und Anschlussstelle für Übertragung von elektrischer Energie und Daten aus dem Teilschnitt nach Fig. 12.

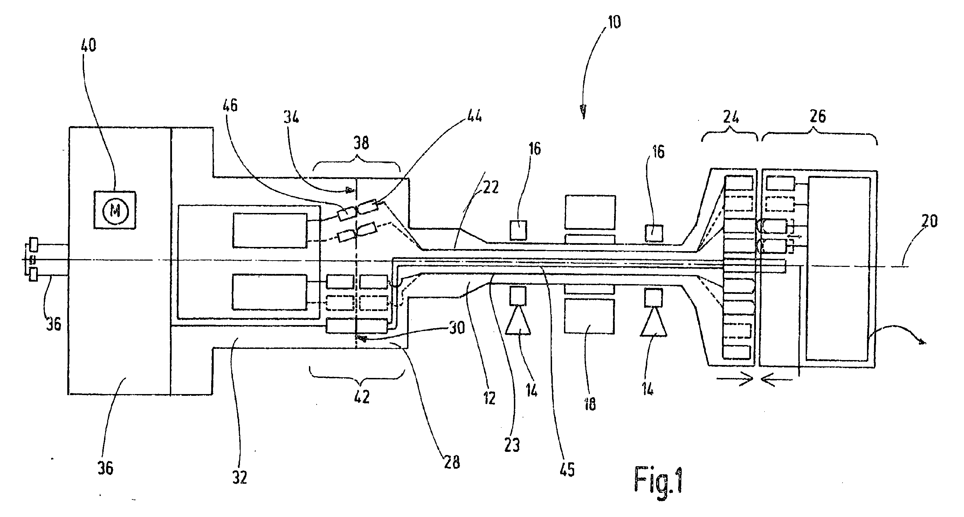

Die Fig. 1 ist eine schematische Ansicht einer Werkzeugmaschine 10. Die Werkzeugmaschine 10 hat eine Maschinenspindel 12. Die Maschinenspindel 12 ist an einem Gestell 14 in einem Drehlager 16 drehbar gelagert. Als Antrieb für die Maschinenspindel 12 ist in der Werkzeugmaschine 10 ein Elektromotor 18 vorgesehen. Mittels des Elektromotors 18 kann die Maschinenspindel 12 um die Spindelachse 20 gedreht werden. Die Maschinenspindel 12 hat eine Leitungsstrecke 22 für elektrischen Strom, um elektrische Energie zu übertragen, und eine Leitungsstrecke 23 für Daten. Die Leitungsstrecke 22 für elektrischen Strom wird über einen mit der Maschinenspindel 12 drehfest verbundenen Rotor 24 aus einem Stator 26 mit elektrischer Energie gespeist. Stator 26 und Rotor 24 sind außerdem für das Übertragen von Daten von Stator 26 zu Rotor 24 in die Maschinenspindel und umgekehrt ausgelegt.

Die Maschinenspindel 12 hat eine Werkzeugaufnahme 28 mit einer Planfläche 30. An der Werkzeugaufnahme 28 ist ein mechatronisches Maschinenwerkzeug 36 mit einem Kupplungselement 32 angeschlossen, das mit der Werkzeugaufnahme 28 der Maschinenspindel 12 kompatibel ist. Das Kupplungselement 32 hat eine plane Ringfläche 34. Die Werkzeugmaschine 10 hat eine galvanische Kontaktstelle 38 für die Übertragung von elektrischer Energie, um einen als Elektromotor ausgebildeten Verbraucher 40 in dem Maschinenwerkzeug 36 mit elektrischer Energie zu versorgen. Über die galvanische Kontaktstelle 38 kann natürlich auch eine Messeinrichtung oder eine Messelektronik in dem Maschinenwerkzeug mit elektrischem Strom versorgt werden. Die galvanische Kontaktstelle 38 für elektrische Energie umfasst ein spindelseitiges Kontaktelement 44 und ein werkzeugseitiges Kontaktelement 46. Bei Anschluss des Kupplungselements 32 an die Maschinenspindel 12 werden das spindelseitige Kontaktelement 44 und das werkzeugseitige Kontaktelement 46 galvanisch verbunden. Über die galvanische Kontaktstelle 38 kann elektrische Leistung in der Größenordnung von 100 Watt oder mehr aus der Maschinenspindel 12 in das Maschinenwerkzeug 36 übertragen werden. Grundsätzlich ist natürlich auch eine Datenübertragung über die galvanische Kontaktstelle 38 möglich.

Neben der galvanischen Kontaktstelle hat die Werkzeugmaschine 10 eine Anschlussstelle 42 für Daten, die ein Steuern des Verbrauchers 40 im Maschinenwerkzeug 36 und ein Auslesen von Verbraucher-Betriebsparametern ermöglicht. Die Anschlussstelle 42 für Daten ist für berührungsfreie Datenübertragung von der Maschinenspindel 12 über das Kupplungselement 32 in das Maschinenwerkzeug 36 und umgekehrt ausgelegt. Bei berührungsfreier Datenübertragung zwischen Maschinenspindel 12 und Kupplungselement 32 wird durch die Anschlussstelle 42 elektrische Leistung übertragen, die vorzugsweise im Bereich von wenigen mW bzw. µW liegt.

In der Maschinenspindel 12 der Werkzeugmaschine 10 ist ein Leitungssystem 45 für Kühlmittel und Blasluft vorgesehen. Das Leitungssystem 45 ist über den Rotor 24 mit dem Stator 26 verbunden. Es ermöglicht die Zufuhr von Kühlmittel und Blasluft über das Kupplungselement 32 zum Maschinenwerkzeug 36. Dies eröffnet die Möglichkeit, dass die Planfläche 30 und die plane Ringfläche 34 sowie die Kontaktelemente 44,46 der galvanischen Kontaktstelle 38 und die Anschlussstelle 42 von Verschmutzung freigeblasen werden kann. Dies ist insbesondere bei Werkzeugwechsel von Bedeutung, da dieser möglichst nur dann erfolgt, wenn die galvanische Kontaktstelle 38 und die Anschlussstelle 42 sauber und trocken sind. Damit werden insbesondere Kurzschlüsse vermieden.

Um die galvanische Kontaktstelle 38 und die Anschlussstelle 42 von Verschmutzung zu befreien und um Kurzschlüsse zu vermeiden, kann auch eine Heizeinrichtung vorgesehen werden, die dazu dient, Flüssigkeit im Bereich der Kontaktstelle 38 und der Anschlussstelle 42 zu verdampfen. Weiter ist es günstig, Isolationsflächen an den Schnittstellen mit einem Material zu beschichten, das nach dem Prinzip des Lotuseffekts Flüssigkeit abweist.

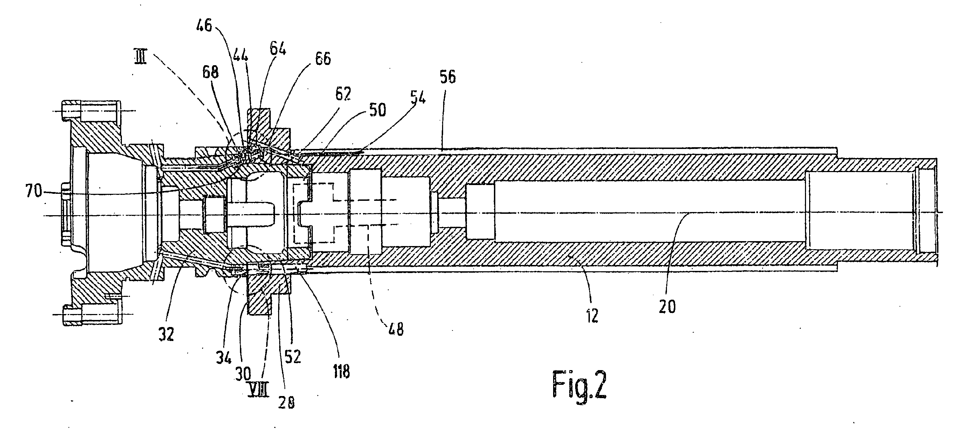

Die Fig. 2 zeigt einen Schnitt der Maschinenspindel 12 mit dem angeschlossenen Kupplungselement 32. Das Kupplungselement 32 hat eine HSK-Schnittstelle. Es ist mittels eines maschinenseitig über eine Zugstange 48 betätigbaren Spannmechanismus mit der Maschinenspindel 12 gekoppelt. Die Zugstange 48 greift hierzu in einen Hohlraum 50 am Schaft 52 des Kupplungselements 32 ein.

Die Maschinenspindel 12 enthält einen elektrischen Versorgungsstrang 54, der als elektrische Leitung ausgebildet ist. Der elektrische Versorgungsstrang 54 ist für das Übertragen von elektrischer Leistung in der Größenordnung von 100 W oder mehr ausgelegt. Der Versorgungsstrang 54 dient dazu, einen Verbraucher 40 im Maschinenwerkzeug 36 mit elektrischer Energie zu versorgen. Der elektrische Versorgungsstrang 54 ist in einer Längsnut 56 am Umfangsbereich der Maschinenspindel 12 geführt. Alternativ hierzu könnte der Versorgungsstrang 54 auch durch eine Längsbohrung in der Maschinenspindel 12 verlegt werden. Um eine mechanische Belastung des Versorgungsstrangs 54 beim Drehen der Maschinenspindel 12 zu unterbinden, ist der Versorgungsstrang 54 in diesem Abschnitt an der Maschinenspindel 12 in Kunststoff, vorzugsweise in Kunstharz eingegossen.

Die Maschinenspindel 12 hat eine Werkzeugaufnahme 28 mit einer Stirnfläche, die als Planfläche 30 ausgebildet ist. Das Kupplungselement 32 liegt mit einer rückwärtigen Fläche in Form einer planen Ringfläche 34 an der Planfläche 30. Beim Kuppeln von Maschinenspindel 12 und Kupplungselement 32 wird hier unter Bildung einer Plananlage die plane Ringfläche 34 gegen die Planfläche 30 angepresst.

Grundsätzlich ist auch eine Verbindung von Kupplungselement 32 und Maschinenspindel 12 nach einem anderen Schnittstellenprinzip möglich, z.B. nach dem ABS-Schnittstellenprinzip, dem HSEZ-Schnittstellenprinzip, dem Steilkegel-Schnittstellenprinzip oder dem Capto-Schnittstellenprinzip. Wichtig ist allerdings, dass das Kupplungselement 32 eine rückwärtige Fläche 34 hat, die bei Anschluss der Werkzeugaufnahme 28 an die Maschinenspindel 12 der werkzeugseitigen Stirnfläche 30 der Maschinenspindel 12 gegenüberliegt.

Für das spindelseitige Kontaktelement 44 ist an der Planfläche 30 der Maschinenspindel 12 eine schräge Aufnahme in Form einer Schrägbohrung 62 vorgesehen. Die Schrägbohrung 62 verläuft unter einem spitzen Winkel von 20° schräg zur Achse 20 der Maschinenspindel 12. In der Schrägbohrung 62 ist eine Lagereinrichtung 64 für das Kontaktelement 44 angeordnet. Das Kontaktelement 44 ist mit dem elektrischen Versorgungsstrang 54 verbunden. Der elektrische Versorgungsstrang 54 ist in einem zur Planfläche 30 weisenden Abschnitt als Spiralkabel 66 ausgeführt. Dies ermöglicht, dass die Lagereinrichtung 64 mit dem Anschlusskontakt 44 für Wartungsarbeiten aus der Schrägbohrung 62 herausgenommen werden kann, ohne dass dabei die Verbindung von Versorgungsstrang 54 und Kontaktelement 44 gelöst werden muss.

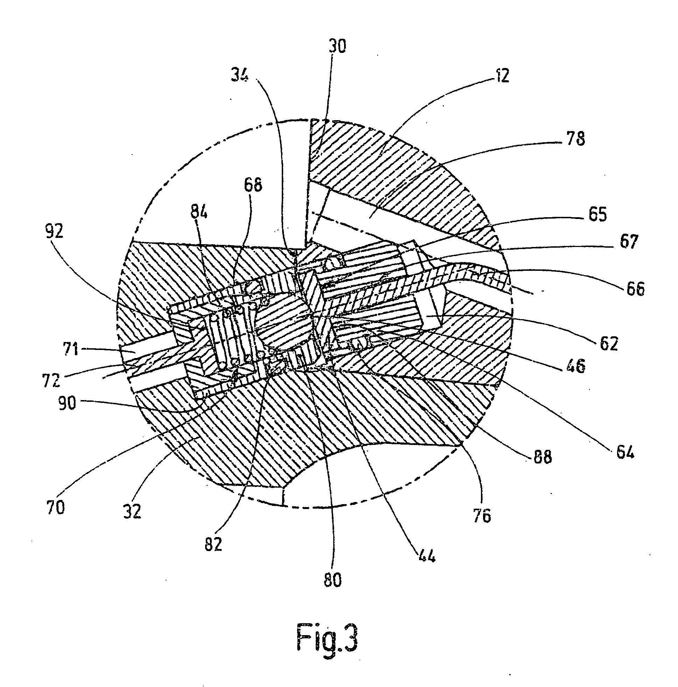

Die Fig. 3 zeigt den Ausschnitt III aus Fig. 2 in einer vergrößerten Ansicht. An der planen Ringfläche 34 für das Kupplungselement 32 an der Maschinenspindel 12 gibt es eine als Schrägbohrung 68 ausgebildete Schrägaufnahme. Die Schrägbohrung 68 enthält eine Lagereinrichtung 70 für das Kontaktelement 46. In der Lagereinrichtung 70 ist ein als leitfähige Kugel ausgebildeter elektrischer Anschlusskontakt 46 aufgenommen. Über das Kontaktelement 46 kann elektrische Energie zum elektrischen Versorgungsstrang 72 in dem Kupplungselement 32 des Maschinenwerkzeugs 36 übertragen werden. Die Lagereinrichtung 70 in der Schrägbohrung 68 wirkt als Schrägführung für das Kontaktelement 46.

Bei Anschluss des Kupplungselements 32 an die Maschinenspindel 12 fluchtet die Schrägbohrung 62 in der Plananlage 30 der Maschinenspindel 12 mit der Schrägbohrung 68 in der Ringfläche 34 des Kupplungselements 32. Über die Plananlage 30 und die Ringfläche 34 werden bei Betrieb eines Maschinenwerkzeugs 36 mittels Form- und Reibschluss sehr große Torsionsmomente von der Maschinenspindel 12 über das Kupplungselement 32 in das Maschinenwerkzeug 36 eingeleitet. Das schräge Anordnen der Bohrungen 62 und 68 in der Plananlage 30 bzw. der planen Ringfläche 34 bewirkt hier eine erhöhte Steifigkeit von Maschinenspindel 12 und Werkzeugaufnahme 32 im Vergleich zu einer parallelen Ausrichtung der Bohrungen im Bezug auf die Spindelachse 20. Aufgrund der Schräganordnung gibt es nämlich Materialbrücken, die zu einer hohen Stabilität der Maschinenspindel 12 im Bereich der Plananlage 30 und des Kupplungselements 32 im Bereich der planen Ringfläche 34 führen.

Um Wartungsarbeiten an der Lagereinrichtung 70 und dem werkzeugseitigen Kontaktelement 46 zu ermöglichen, hat der Versorgungsstrang 72 in dem Kupplungselement 32 ebenfalls einen Spiralkabelabschnitt. Halteeinrichtung 70 und Kontaktelement 46 können dann wie an der Maschinenspindel 12 aus der Schrägbohrung 68 entnommen werden, ohne dass hierfür elektrische Kontakte gelöst werden müssen.

Das spindelseitige Kontaktelement 44 ist ein scheibenförmiger elektrischer Leiter, der in einen Stirnabschnitt eines als Lagereinrichtung wirkenden zylinderförmigen Kunststoffkörpers 64 eingesetzt ist. Das Kontaktelement 44 befindet sich in einer kreisrunden Ausnehmung 65 an der Stirnseite des Kunststoffkörpers 64. Der Kunststoffkörper 64 ist mittels eines Dichtrings 76 in der Schrägbohrung 62 gehalten. Der Dichtring 76 unterbindet auch, dass Kühlmittel, das beim Betreiben der Werkzeugmaschine 10 eingesetzt wird, über die Schrägbohrung 78 zum Kontaktelement 44 gelangen kann. Der elektrische Versorgungsstrang 54 ist durch eine mittige Bohrung 67 im Kunststoffkörper 64 verlegt und über eine Schrägbohrung 78 an der Planfläche 30 der Maschinenspindel 12 zu der Längsnut 56 der Maschinenspindel 12 geführt. Die Lagereinrichtung 64 mit dem elektrischen Kontaktelement 44 ist an der Maschinenspindel 12 in Bezug auf die Planfläche 30 zurückgesetzt angeordnet. D.h. das Kontaktelement 44 ragt nicht aus der Planfläche 30 hervor. Am Kontaktelement 44 ist eine konkave Kalotte 47 ausgebildet, die an das Anschlusselement 46 angepasst ist. Dies gewährleistet, dass an die Maschinenspindel 12 ohne weiteres eine konventionelle Werkzeugaufnahme ohne Schnittstelle für Übertragung von Energie bzw. Daten angeschlossen werden kann.

Das Kontaktelement 46 ist eine Kugel, die aus elektrisch leitendem Material besteht. Die Kugel 46 ist in einem hülsenförmigen Konuskäfig 80 geführt.

Die Querschnittsfläche des von dem hülsenförmigen Konuskäfig 80 gebildeten Hohlraums, in dem die Kugel 46 aufgenommen ist, verjüngt sich in dem zur planen Ringfläche 34 des Kupplungselements 32 weisenden Abschnitt des Konuskäfigs 80.

Die Kugel 46 wird mittels einer Schraubenfeder 84 in den sich verjüngenden Bereich des Konuskäfigs 80 gedrückt. Die Verjüngung des Konuskäfigs 80 gewährleistet, dass die Kugel 46 trotz der auf sie wirkenden Federkraft nicht aus dem Konuskäfig 80 herausbewegt wird.

Die Verjüngung des Konuskäfigs 80 ist so gestaltet, dass die Kugel 46 mit einem Kalottenabschnitt 86 über einen Stirnbereich 88 des Konuskäfigs 80 hinausragt. Die Kugel 46 berührt damit das elektrische Kontaktelement 44 in der Maschinenspindel 12, wenn die Werkzeugaufnahme 32 an die Maschinenspindel 12 angeschlossen wird. Dies gewährleistet, dass die als elektrisches Kontaktelement 46 wirkende Kugel trotz der zurückgesetzten Anordnung der Halteeinrichtung 64 an der Maschinenspindel 12 am elektrischen Kontaktelement 44 liegt.

Der Konuskäfig 80 besteht aus elektrisch isolierendem Material. Er ist mit einem Dichtring 82 in der Schrägbohrung 68 der Werkzeugaufnahme 32 gehalten. Der Dichtring 82 vermeidet insbesondere, dass Kühlmittel über den Kanal 71 für den Versorgungsstrang 72 in den Konuskäfig 80 eindringt.

Die Feder 84 im Konuskäfig 80 besteht aus elektrisch leitfähigem Material. Sie ist in einer Führung 90 im Konuskäfig 80 angeordnet. Die Feder 84 ist gegen ein elektrisches Anschlussstück 92 abgestützt, das mit dem Versorgungsstrang 72 in der Werkzeugaufnahme 32 verbunden ist.

Beim Betrieb der Werkzeugmaschine 10 werden Maschinenspindel 12 und Kupplungselement 32 häufig mit hoher Geschwindigkeit um die Spindelachse 20 gedreht. Die Verjüngung des Konuskäfigs 80 ist so gestaltet, dass sich die Kugel 46 in Richtung des Kontaktelements 44 bewegen kann. Dabei vergrößert sich der Abstand der Kugel 46 von der Spindelachse 20. Für die Kugel 46 im Konuskäfig 80 gibt es also ein leichtes Spiel. Dies hat zur Folge, dass die Kugel 46 aufgrund der an ihr angreifenden Fliehkraft bzw. Fliehkraftkomponente gegen das Kontaktelement 44 gedrängt wird. Die Federkraft, der die Kugel 46 ausgesetzt ist, wird so durch die Fliehkraft verstärkt. Die Kugel 46 liegt dann mit Druckkraft am Anschlusskontakt 44.

Bei der Werkzeugmaschine 10 hat die Kontaktstelle 38 genau ein spindelseitiges galvanisches Kontaktelement 44 und ein werkzeugseitiges Kontaktelement 46. Über diese Kontaktstelle ist ein Phasenanschluss des Verbrauchers 40 im Maschinenwerkzeug 36 mit dem elektrischen Versorgungsstrang 54 in der Maschinenspindel verbunden. Die elektrische Masse des Verbrauchers 40 ist demgegenüber durch die Ringfläche 34 des Maschinenwerkzeug-Kupplungselements 32 und der Planfläche 30 der Maschinenspindel 12 an die Maschinenspindel 12 gelegt, die über ein Drehlager geerdet ist. Alternativ hierzu ist es natürlich auch möglich, in einem Maschinenwerkzeug eine oder mehrere entsprechende mitdrehende galvanische Kontaktstellen vorzusehen, die für einen Verbraucher im Maschinenwerkzeug einen Phasenanschluss und einen Masseanschluss jeweils über ein spindelseitiges und ein werkzeugseitiges Kontaktelement ermöglichen.

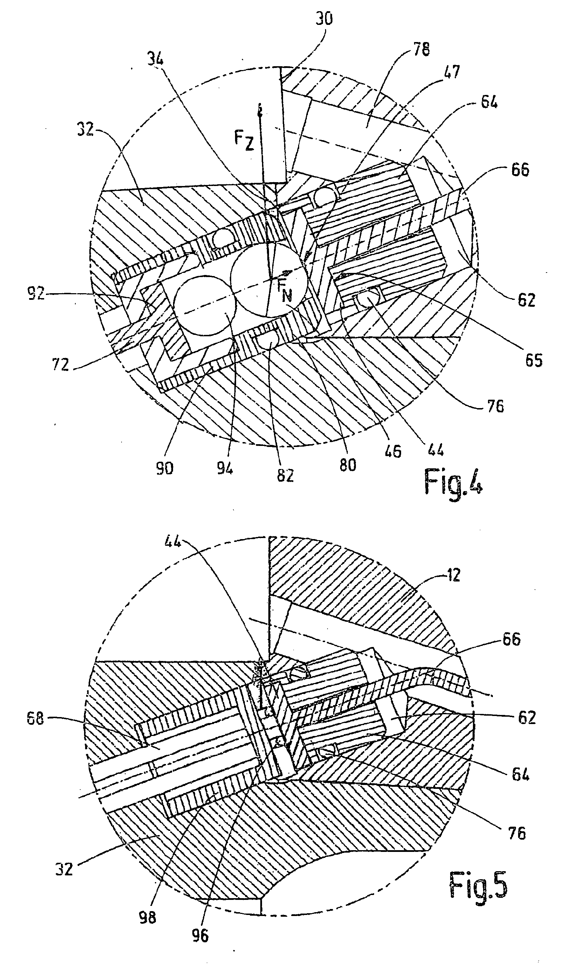

Die Fig. 4 zeigt eine alternative Ausführung der Kontaktstelle 38 aus Fig. 1 für die Übertragung von elektrischer Energie aus der Maschinenspindel 12 in das Kupplungselement 32. Der maschinenspindelseitige Abschnitt der Kontaktstelle 38 ist wie in anhand von Fig. 2 und 3 erläutert ausgeführt. Der werkzeugseitige Abschnitt der Kontaktstelle hat jedoch anstelle der Schraubenfeder eine elastische Kugel 94, die aus elektrisch leitfähigem Material besteht. Wie bei der anhand von Fig. 2 und 3 erläuterten Ausführung der Kontaktstelle drückt die elastische Kugel 94 die als Kontaktelement wirkende Kugel 46 gegen das Kontaktelement 44. Bei Drehen der Maschinenspindel 12 wird dies durch die Fliehkraftkomponente F_{N} der Fliehkraft F_{Z} unterstützt.

Die Fig. 5 zeigt eine weitere alternative Ausführung der Kontaktstelle 38 aus Fig. 1 für die Übertragung von elektrischer Energie aus der Maschinenspindel 12 in das Kupplungselement 32. Der maschinenspindelseitige Abschnitt der Kontaktstelle ist wieder wie anhand von Fig. 2 und 3 erläutert ausgeführt. An dem Kupplungselement 32 hat diese Kontaktstelle ein als federnder Doppelkontakt 96 ausgebildetes elektrisches Kontaktelement. Der federnde Doppelkontakt 96 wiederum ist in einer als Hülse 98 gestalteten Lager- bzw. Halteeinrichtung aufgenommen. Auch hier wird das Anliegen von Doppelkontakt 96 am Kontaktelement 44 durch die Fliehkraft unterstützt.

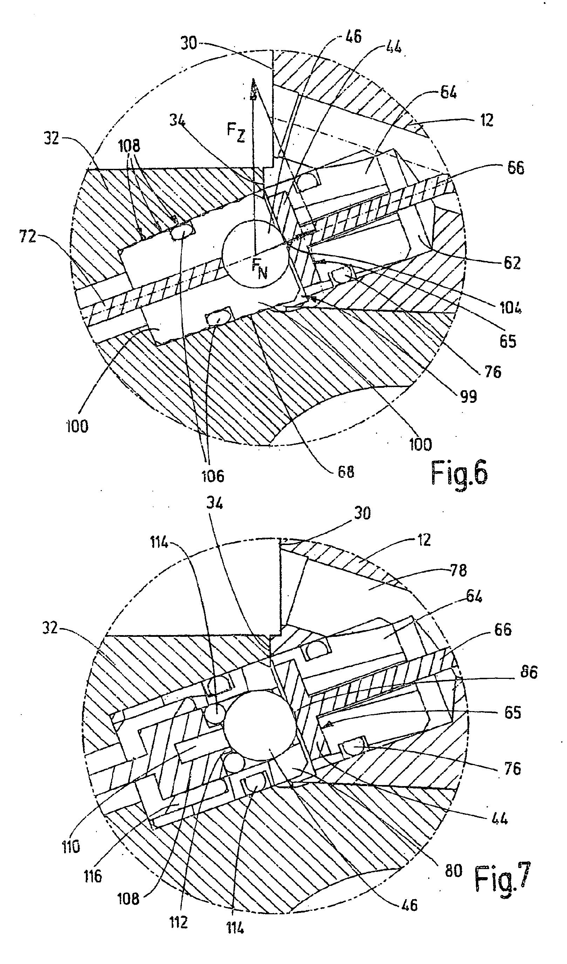

Bei der in Fig. 6 gezeigten Ausführung der Kontaktstelle für Übertragung von elektrischer Energie aus der Maschinenspindel 12 in das Kupplungselement 32 ist die Schrägbohrung 68 mit einem zur planen Ringfläche 34 des Kupplungselements 32 sich öffnenden Konus 99 ausgeführt. An diesem Konus 99 ist ein elastomerer Körper 100 angeordnet. Der elastomere Körper 100 umgibt bis auf einen Kalottenabschnitt 104 eine als werkzeugseitiges Kontaktelement 46 wirkende Kugel. Die Kugel 46 ist an den elektrischen Versorgungsstrang 72 angeschlossen. Ein Abschnitt des Versorgungsstrangs 72 ist vom elastomeren Körper 100 umgeben. Der elastomere Körper 100 ist mittels eines O-Rings 106 in dem Kupplungselement 32 gehalten. Er hat eine wellige Außenkontur 108, mittels der eine zusätzliche Dichtwirkung erzielt wird. Der elastomere Körper 100 hat eine Federfunktion und drückt die Kugel 46 gegen das spindelseitige Kontaktelement 44, wenn das Kupplungselement 32 an die Maschinenspindel 12 angeschlossen ist. Auch hier wird das Anliegen der Kugel 46 am Kontaktelement 44 durch die Komponente F_{N} der Fliehkraft F_{Z} unterstützt. Gleichzeitig stabilisiert der elastomere Körper 100 die als werkzeugseitiges Kontaktelement wirkende Kugel 46. Von Vorteil ist, dass die werkzeugaufnahmeseitige Partie bei dieser Ausführung der Kontaktstelle sehr einfach montiert werden kann: Zunächst wird die Kugel 46 in den elastomeren Körper 100 eingebettet. Der elastomere Körper 100 wird dann in die Schrägbohrung 68 eingeführt bzw. eingedrückt. In der eingedrückten Stellung wird er hier dann verspannt bzw. verrastet. Der elastomere Körper 100 besteht aus einem Gummimaterial, z.B. Silikon, dessen Härte sich einstellen lässt. Alternativ ist es möglich, den elastomeren Körper 100 auch aus Teflonmaterial auszuführen. Der elastomere Körper kann dann sehr hohe Betriebstemperaturen aushalten. Auch sind die schmutzabweisenden Eigenschaften von Teflon in diesem Einsatzgebiet an Werkzeugmaschinen von Vorteil.

Die Fig. 7 zeigt eine weitere alternative Ausführung der Kontaktstelle 38 aus Fig. 1 für die Übertragung von elektrischer Energie aus der Maschinenspindel 12 in das Kupplungselement 32. Die maschinenspindelseitige Partie der Kontaktstelle ist wiederum wie anhand von Fig. 2 und 3 erläutert ausgeführt. Als elektrisches Kontaktelement hat die Kontaktstelle an dem Kupplungselement 32 eine Kugel 46. Die Kugel 46 ist in einem Konuskäfig 80 aus elektrisch isolierendem Material angeordnet. Dabei ist der Konuskäfig 80 so ausgebildet, dass die Kugel 46 mit einem Kalottenabschnitt 86 über einen Stirnbereich 88 des Konuskäfigs 80 hinausragt. Im Konuskäfig 80 liegt die Kugel 46 an einem Leiterkörper 108 an, in dem es eine Sackbohrung 110 gibt. Der Leiterkörper 108 hat einen Schaft 112, der von einem O-Ring 114 umgeben ist. Der Leiterkörper 110 ist in einer Führung 116 aufgenommen, die sich in einem Konuskäfig 80 befindet.

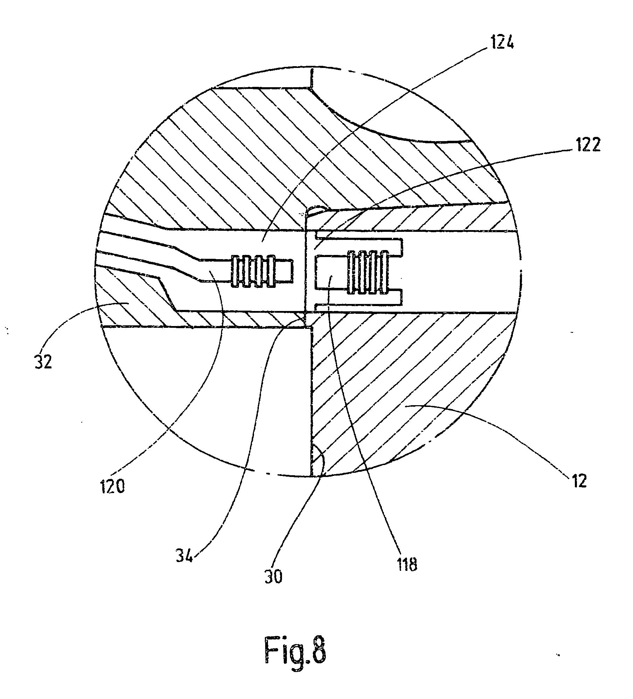

Die Fig. 8 zeigt den Ausschnitt VIII aus Fig. 2 in einer vergrößerten Ansicht. Die Anschlussstelle 42 für Datenübertragung hat ein induktives Datenübertragungselement 118, das in der Maschinenspindel 12 angeordnet ist. Sie umfasst ein induktives Datenübertragungselement 120, das sich in dem Kupplungselement 32 des Maschinenwerkzeugs 36 befindet. Das Datenübertragungselement 118 befindet sich in einer Bohrung 122 an der Planfläche 30 der Maschinenspindel 12. Die Bohrung 122 verläuft parallel zur Spindelachse 20 in der Maschinenspindel 12. Für das Datenübertragungselement 120 ist eine Bohrung 124 an der planen Ringfläche 34 des Kupplungselements 32 vorgesehen. Auch diese Bohrung 124 verläuft in dem Kupplungselement 32 parallel zur Spindelachse 20 der Maschinenspindel 12. Bei Anlegen des Kupplungselements 32 an die Maschinenspindel 12 fluchtet die Bohrung 124 mit der Bohrung 122.

Die Anschlussstelle für berührungslose Datenübertragung kann grundsätzlich auch für Datenübertragung mittels kapazitiver Kopplung, mittels elektromagnetischer Wellen oder mittels Licht ausgelegt werden. Dann müssen die Datenübertragungselemente 118,120 entsprechend als Kapazitäten, als elektromagnetische Sende bzw. Empfänger oder als Lichtleiter ausgebildet sein.

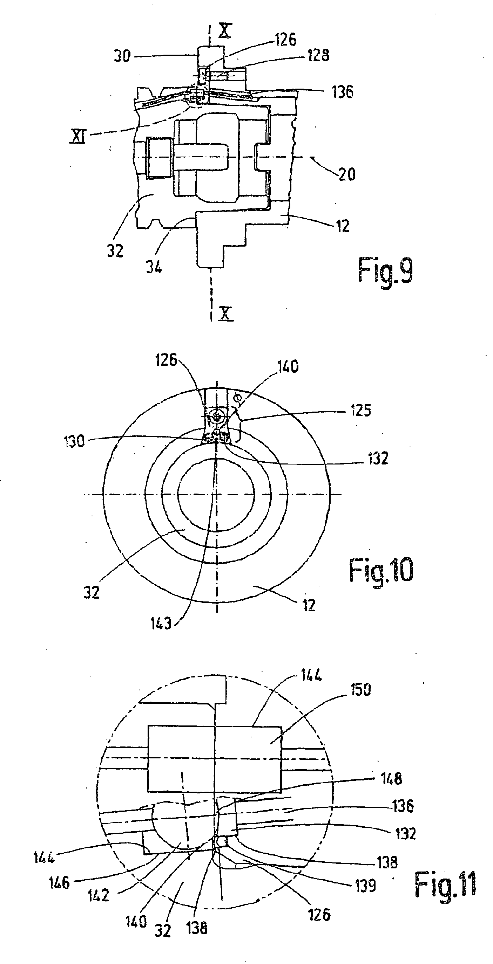

Als Teilschnitt zeigt die Fig. 9 eine alternative Ausführung einer Maschinenspindel 12 mit einer Werkzeugaufnahme 28. In der Werkzeugaufnahme 28 ist ein Kupplungselement 32 aufgenommen. Wiederum hat das Kupplungselement 32 eine HSK-Schnittstelle. Hier ist nun eine gemeinsame Kontakt- und Anschlussstelle 125 für Übertragung von elektrischer Energie und Daten vorgesehen.

Die Fig. 10 ist ein Schnitt entlang der Linie X-X aus Fig. 9. Der maschinenspindelseitige Abschnitt der Kontakt- und Anschlussstelle 125 ist in einer austauschbaren Leiste 126 an der als Planfläche ausgebildeten Stirnfläche 30 der Maschinenspindel 12 aufgenommen. Die austauschbare Leiste 126 ist mit einer Befestigungsschraube 128 an der Maschinenspindel 12 festgelegt. Die Leiste 126 fluchtet mit der Planfläche 30 der Maschinenspindel 12. Die Leiste 126 besteht aus stabilem Material, z.B. aus Epoxidharz oder aus Stahl. Sie stabilisiert die Planfläche 30 der Maschinenspindel 12. In der Leiste 126 ist ein erstes elektrisches Kontaktelement 130 und ein weiteres elektrisches Kontaktelement 132 aufgenommen, die für die Übertragung von elektrischer Energie aus einem ersten und einem zweiten Versorgungsstrang 136 von der Maschinenspindel 12 in das Kupplungselement 32 des Maschinenwerkzeugs 36 dienen.

Die Fig. 11 zeigt den Ausschnitt XI aus Fig. 9 in einer vergrößerten Ansicht. Die elektrischen Kontaktelemente 130,132 befinden sich in einer als Schrägbohrung ausgebildeten Aufnahme 138 an der Leiste 126.

In der Aufnahme 138 ist das spindelseitige elektrische Kontaktelement 132 mit einem O-Ring 139 fixiert. Das spindelseitige Kontaktelement 132 hat eine konkave Oberfläche 140. Die konkave Oberfläche ist für den Eingriff eines zugehörigen Kontaktelements 142 ausgebildet, das als Kugel gestaltet ist und sich in dem Kupplungselement 32 des Maschinenwerkzeugs 36 befindet.

Das werkzeugseitige Kontaktelement 142 ist an dem Kupplungselement 32 in einem Elastomerkörper 144 angeordnet, für den eine Aufnahme in Form einer Schrägbohrung 146 in der planen Ringfläche 34 des Kupplungselements 32 vorgesehen ist.

Die Schrägbohrung 146 fluchtet mit der als Schrägbohrung 138 ausgebildeten Vertiefung an der Maschinenspindel 12, wenn das Kupplungselement 32 an die Maschinenspindel 12 angeschlossen wird. Es ist grundsätzlich aber auch möglich, dass die Schrägbohrungen 138,146 in einem Winkel zueinander stehen.

Das als Kugel ausgebildete werkzeugseitige Kontaktelement 142 ragt mit einem Kalottenabschnitt 148 aus dem Elastomerkörper 144. Ähnlich wie bei der anhand von Fig. 7 beschriebenen Ausführung der Kontaktstelle drückt der Elastomerkörper 144 des kugelförmigen werkzeugseitigen Kontaktelements 142 gegen das spindelseitige Kontaktelement 132. Unter Wirkung der Fliehkraft beim Drehen der Maschinenspindel 12 wird diese Druckkraft verstärkt. Für Austausch und Reinigen des maschinenspindelseitigen Abschnitts der Schnittstelle 125 muss lediglich die Befestigungsschraube 128 für die Leiste 126 gelöst werden.

Zusätzlich ist in die Leiste 126 ein Datenübertragungselement 150 integriert. Das Datenübertragungselement 150 ist an der austauschbaren Leiste 126 in einer zur Spindelachse 20 vorzugsweise parallel ausgerichteten Bohrung 144 aufgenommen, die als Aufnahme wirkt.

Die Maschinenspindel 12 hat einen Kanal für Blasluft, der an der Leiste 126 eine Austrittsöffnung 143 aufweist. Dies ermöglicht, die Kontakt- und Anschlussstelle 125 für Energie- und Datenübertragung mit Blasluft von Verschmutzung freizublasen.

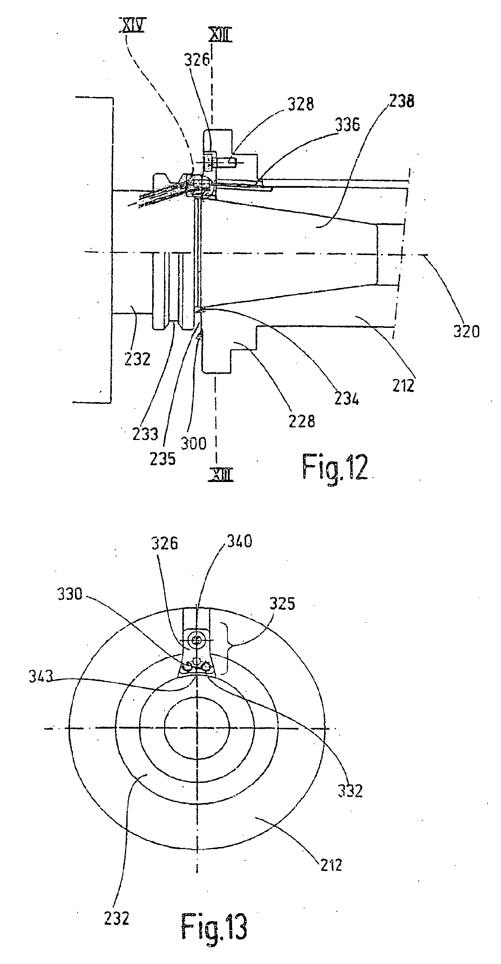

Als Teilschnitt zeigt die Fig. 12 eine weitere alternative Ausführung einer Maschinenspindel 212 mit einer Werkzeugaufnahme 228. In der Werkzeugaufnahme 228 ist ein Kupplungselement 232 aufgenommen. Das Kupplungselement 232 hat eine Schnittstelle mit Steilkegel 238. Auch hier ist eine gemeinsame Kontakt- und Anschlussstelle 325 für Übertragung von elektrischer Energie und Daten vorgesehen. An dem Kupplungselement 232 ist eine Greiferrille 233 ausgebildet, die eine rückwärtige Fläche 234 hat, welche zur Stirnfläche 300 der Werkzeugaufnahme 228 der Maschinenspindel 212 mit der Spindelachse 320 weist. Diese rückwärtige Fläche 234 kann auch segmentförmig ausgebildet sein. Hier gibt es zwischen der rückwärtigen Fläche 234 des Kupplungselements 232 und der Stirnfläche 300 der Werkzeugaufnahme 228 einen Luftspalt 235. Die rückwärtige Fläche 234 des Kupplungselements 232 und die Stirnfläche 300 der Werkzeugaufnahme 228 bilden hier also keine Plananlage.

Die Fig. 13 ist ein Schnitt entlang der Linie XIII - XIII aus Fig. 12. Der maschinenspindelseitige Abschnitt der Kontakt- und Anschlussstelle 325 ist wie anhand von Fig. 10 erläutert ausgeführt. Er ist in einer austauschbaren Leiste 326 an der Stirnfläche 300 der Werkzeugaufnahme 328 der Maschinenspindel 212 vorgesehen. Zur Erläuterung der Baugruppen der maschinenspindelseitigen Kontakt- und Anschlussstelle wird auf die Figurenbeschreibung zu Fig. 10 verwiesen. Entsprechende Baugruppen haben in Fig. 13 im Vergleich zu Fig. 10 Bezugszeichen, die um die Zahl 200 erhöht sind. In der Leiste 326 ist ein erstes elektrisches Kontaktelement 330 und ein weiteres elektrisches Kontaktelement 332 aufgenommen, die für die Übertragung von elektrischer Energie aus einem ersten und einem zweiten Versorgungsstrang 336 von der Maschinenspindel 212 in das Kupplungselement 232 des Maschinenwerkzeugs dienen.

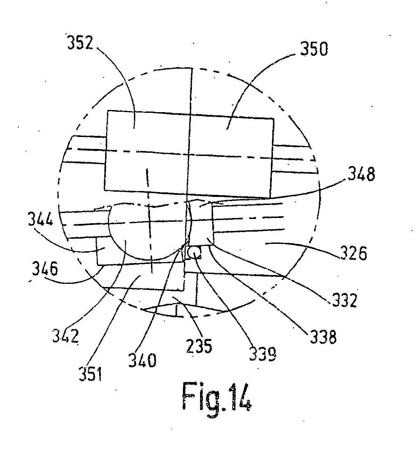

Die Fig. 14 zeigt den Ausschnitt XIV aus Fig. 12 in einer vergrößerten Ansicht. Die elektrischen Kontaktelemente 330, 332 befinden sich in einer als Schrägbohrung ausgebildeten Aufnahme 338 an der Leiste 326. In der Aufnahme 338 ist das spindelseitige elektrische Kontaktelement 332 darum mit einem O-Ring 339 fixiert. Das spindelseitige Kontaktelement 332 hat eine konkave Oberfläche 340. Die konkave Oberfläche ist für den Eingriff eines zugehörigen Kontaktelements 342 ausgebildet, das als Kugel gestaltet ist und sich in dem Kupplungselement 232 des Maschinenwerkzeugs befindet. Das werkzeugseitige Kontaktelement 342 befindet sich in einer austauschbaren Haltevorrichtung 351, die an einem Segment der Greiferrillenanordnung 233 an der rückwärtigen Fläche 234 des Kupplungselements 232 aufgenommen ist. In der Halteeinrichtung 350 ist das werkzeugseitige Kontaktelement 342 in einem Elastomerkörper 344 angeordnet, für den dort eine Aufnahme in Form einer Schrägbohrung 346 vorgesehen ist.

Die Schrägbohrung 346 fluchtet mit der als Schrägbohrung 338 ausgebildeten Vertiefung an der Maschinenspindel 212, wenn das Kupplungselement 232 an die Maschinenspindel 212 angeschlossen wird. Es ist grundsätzlich aber auch möglich, dass die Schrägbohrungen 338, 346 in einem Winkel zueinander stehen.

Das als Kugel ausgebildete werkzeugseitige Kontaktelement 342 ragt mit einem Kalottenabschnitt 348 aus dem Elastomerkörper 344. Wie bei der anhand von Fig. 7 beschriebenen Ausführung der Kontaktstelle drückt der Elastomerkörper 344 des kugelförmigen werkzeugseitigen Kontaktelements 342 gegen das spindelseitige Kontaktelement 332. Unter Wirkung der Fliehkraft beim Drehen der Maschinenspindel 212 wird diese Druckkraft verstärkt.

In die Leiste 326 an der Maschinenspindel 212 ist ein Datenübertragungselement 350 integriert. Das Datenübertragungselement 350 ist hier in einer zur Spindelachse 20 parallel ausgerichteten Bohrung 344 aufgenommen, die als Aufnahme wirkt. Dem Datenübertragungselement 350 ist ein Datenübertragungselement 352 zugeordnet, das sich in einer Bohrung in der Halteeinrichtung 351 befindet.

Die Datenübertragungselemente 350, 352 sind für die berührungslose Übertragung von Daten aus der Maschinenspindel 212 zu dem Kupplungselement 228 und umgekehrt ausgelegt. Die an dem Kupplungselement 228 aufgenommene Halteeinrichtung 351 für das elektrische Kontaktelement 342 und das Datenübertragungselement 352 liegt mit geringem Luftspalt an der Leiste 326 am Kupplungselement 232 der Maschinenspindel. Um das Eindringen von Schmutz zu vermeiden, beträgt dieser Luftspalt vorzugsweise nur wenige Mikrometer. Es ist aber auch möglich, dass die Oberflächen der Haltevorrichtung 351 und die Leiste 326 unmittelbar aneinander liegen.

Zusammenfassend ist folgendes festzuhalten: Die Erfindung betrifft eine Werkzeugmaschine 10 mit einer um eine Spindelachse 20 drehbaren motorisch angetriebenen Maschinenspindel 12. Die Maschinenspindel 12 weist eine stirnseitige Werkzeugaufnahme 28 auf. An der Maschinenspindel 12 ist ein Maschinenwerkzeug 36 auswechselbar angeordnet. Das Maschinenwerkzeug 36 hat ein mit der Werkzeugaufnahme 28 der Maschinenspindel 12 kompatibles Kupplungselement 32. Das Kupplungselement 32 hat eine zur Maschinenspindel weisende rückwärtige Fläche 34. Die Werkzeugaufnahme 28 umfasst eine der rückwärtigen Fläche 34 des Kupplungselements 32 gegenüberliegende Stirnfläche 30. Die Werkzeugmaschine weist mindestens eine galvanische Kontaktstelle 38 für die elektrische Strom- oder Datenübertragung auf, die zwischen der Maschinenspindel 12 und dem Maschinenwerkzeug 36 angeordnet ist und sich mit der Maschinenspindel 12 mitdreht. Die galvanische Kontaktstelle hat ein an der Stirnfläche 30 der Werkzeugaufnahme 28 angeordnetes spindelseitiges Kontaktelement 44 und ein an der rückwärtigen Fläche 34 des Kupplungselements 32 angeordnetes werkzeugseitiges Kontaktelement 46. Das spindelseitige Kontaktelement 44 und das werkzeugseitige Kontaktelement 46 sind unter der Einwirkung einer beim Drehen der Maschinenspindel 12 um die Spindelachse 20 auftretenden Fliegkraftkomponente relativ zueinander bewegbar und unter Kontaktbildung gegeneinander drückbar.

## Patentansprüche

1. Werkzeugmaschine (10) mit einer um eine Spindelachse (20,320) drehbaren, eine stirnseitige Werkzeugaufnahme (28,228) aufweisenden, motorisch angetriebenen Maschinenspindel (12,212) und mit einem an der Maschinenspindel (12,212) auswechselbar angeordneten Maschinenwerkzeug (36), das ein mit der Werkzeugaufnahme (28,228) der Maschinenspindel (12,212) kompatibles Kupplungselement (32,232) mit einer zur Maschinenspindel weisenden rückwärtigen Fläche (34,234) aufweist, *und mit einer an der* Werkzeugaufnahme (28,228) *ausgebildeten,* der rückwärtigen Fläche (34) des Kupplungselements (32) gegenüberliegende Stirnfläche (30,300), umfassend *mindestens* eine zwischen der Maschinenspindel (12,212) und dem Maschinenwerkzeug (36) angeordnete, mitdrehende galvanische Kontaktstelle (38) für die elektrische Strom- oder Datenübertragung, die ein an der Stirnfläche (30,300) der Werkzeugaufnahme (28,228) angeordnetes spindelseitiges Kontaktelement (44,132,348) und ein an der rückwärtigen Fläche (34) des Kupplungselements (32) angeordnetes werkzeugseitiges Kontaktelement (46,142,342) aufweist, **dadurch gekennzeichnet, dass** das spindelseitige Kontaktelement (44) *und* das werkzeugseitige Kontaktelement (46) *in einer einen spitzen Winkel mit der Spindelachse (20) einschließenden* Schrägaufnahme (62,70) *angeordnet ist, wobei das spindelseitige Kontaktelement (44) oder das werkzeugseitige Kontaktelement (46)* in einer Richtung, in der sich der Abstand von der Spindelachse (20) vergrößert und in der sich das werkzeugseitige oder das spindelseitige Kontaktelement (44,46) befindet, derart bewegbar ist, dass das spindelseitige Kontaktelement (44,132,348) und das werkzeugseitige Kontaktelement (46,142,342) unter der Einwirkung einer beim Drehen der Maschinenspindel (12,212) um die Spindelachse (20,320) auftretenden Fliehkraftkomponente unter Kontaktbildung gegeneinander gedrückt werden.

2. *Werkzeugmaschine nach Anspruch 1, **dadurch gekennzeichnet dass** die Stirnfläche (30, 300) eine Planfläche ist und die Schräglaufnahme* (*62*) *für das spindelseitige Kontaktelement* (*44*) *zu der Planfläche (30, 300) hin offen ist.*

3. Werkzeugmaschine nach Anspruch 1 *oder 2,* **dadurch gekennzeichnet, dass** der spitze Winkel 5° bis 45°, vorzugsweise etwa 20° beträgt und/oder, dass die Schrägaufnahme (62) ausgehend von der Stirnfläche (30) der Maschinenspindel (12) in einer Richtung verläuft, die von der Spindelachse (20) weg weist und/oder, dass die Schrägaufnahme (62) zur Stirnfläche (30) der Maschinenspindel (12) gegen das Eindringen von Flüssigkeit und Schmutz abgedichtet ist und/oder, dass das spindelseitige Kontaktelement (44) starr in der Maschinenspindel (12) angeordnet ist und/oder, dass das spindelseitige Kontaktelement (44) eine ebene Kontaktfläche mit einer Kalotte (47) als konvexe Vertiefung aufweist und/oder, dass das spindelseitige Kontaktelement (44) in Bezug auf die Stirnfläche (30) der Maschinenspindel (12) zurückgesetzt angeordnet ist.

4. Werkzeugmaschine nach einem der Ansprüche *1 bis 3,* **dadurch gekennzeichnet, dass** das werkzeugseitige Kontaktelement (46) in einer zur rückwärtigen Fläche (34) des Kupplungselements (32) offenen Schrägführung (70) *ausgebildeten Schrägaufnahme angeordnet ist und das spindelseitige Kontaktelement (44) in der zu der Planfläche* (*3a*) *der Maschinenspindel* (*12*) *hin offenen Schrägaufnahme (62) festliegt.*

5. Werkzeugmaschine nach Anspruch 4, **dadurch gekennzeichnet, dass** die Schrägführung (70) in Bezug auf die Spindelachse (20) unter einem Winkel zwischen 5° und 45°, vorzugsweise unter einem Winkel von etwa 20° ausgerichtet ist und/oder, dass die Schrägführung (70) ausgehend von der rückwärtigen Fläche (34) des Maschinenwerkzeugs (36) in Bezug auf die Spindelachse (20) mit einer zur Spindelachse (20) weisenden Richtungskomponente verläuft und/oder dass die Schrägführung (70) im Kupplungselement (32) im Bereich der rückwärtigen Fläche (34) gegen das Eindringen von Flüssigkeit und Schmutz abgedichtet ist.

6. Werkzeugmaschine nach Anspruch *4 oder 5*, **dadurch gekennzeichnet, dass** das werkzeugseitige Kontaktelement (46) relativ zur Schrägführung (70) bewegbar ist.

7. Werkzeugmaschine nach Anspruch 6, **dadurch gekennzeichnet, dass** das werkzeugseitige Kontaktelement als Kugel (46) ausgebildet ist

8. Werkzeugmaschine nach Anspruch 7, **dadurch gekennzeichnet, dass** in der Schrägführung (70) ein gegen die Kugel (46) in Richtung des spindeiseitigen Kontaktelements (44) einwirkendes Federelement (84) angeordnet ist.

9. Werkzeugmaschine nach Anspruch 8, **dadurch gekennzeichnet, dass** das Federelement ein elastischer Körper, insbesondere eine Schraubenfeder (84) ist und/oder, dass das Federelement eine elastische Kugel (94) ist und/oder, dass das Federelement ein die Kugel (46) teilweise umgebender Elastomerkörper (100) ist.

10. Werkzeugmaschine nach einem der Ansprüche 1 bis 9, **dadurch gekennzeichnet, dass** die rückwärtige Fläche des Kupplungselements (32) eine das Kupplungselement (32) umgebende plane Ringfläche (34) ist und die Stirnfläche (30) der Werkzeugaufnahme (28) als Planfläche (30) ausgebildet ist, gegen welche die plane Ringfläche (34) beim Kupplungsvorgang unter Bildung einer Plananlage anpressbar ist und/oder, dass das werkzeugseitige Kontaktelement als Doppelkontakt (96) ausgebildet ist und/oder, dass das werkzeugseitige Kontaktelement (46) in Bezug auf die rückwärtige Fläche (34) des Kupplungselements (32) zurückgesetzt angeordnet ist.

11. Werkzeugmaschine nach einem der Ansprüche 1 bis 10, **dadurch gekennzeichnet, dass** eine mitdrehende Anschlussstelle (42) für die Datenübertragung zwischen Maschinenspindel (12) und Maschinenwerkzeug (36) vorgesehen ist, die ein spindelseitiges (118) und ein werkzeugseitiges Datenübertragungselement (120) aufweist.

12. Werkzeugmaschine nach Anspruch *11*, **dadurch gekennzeichnet, dass** die Anschlussstelle (42) für berührungslose Datenübertragung ausgelegt ist und/oder, dass die Anschlussstelle (42) eine induktive, kapazitive, elektromagnetische oder optische Übertragungsstrecke bildet und/oder, dass der mitdrehenden Anschlussstelle für die Datenübertragung (125) ein Auslass (143) für Blasluft zugeordnet ist und/oder dass der mitdrehenden Anschlussstelle für die Datenübertragung ein Heizelement für das Verdampfen von Fluid zugeordnet ist.

13. Werkzeugmaschine nach Anspruch *11 oder 12*, **dadurch gekennzeichnet, dass** das spindelseitige Datenübertragungselement (118) in einer Aufnahme (122) im Bereich der Planfläche (30) der Werkzeugaufnahme (28) der Maschinenspindel (12) angeordnet ist.

14. Werkzeugmaschine nach Anspruch *13*, **dadurch gekennzeichnet, dass** das spindelseitige Datenübertragungselement (118) im Bezug auf die Stirnfläche (30) der Werkzeugaufnahme (28) zurückgesetzt angeordnet ist und/oder, dass die Aufnahme eine parallel zur Spindelachse (20) verlaufende Bohrung (122) ist.

15. Werkzeugmaschine nach einem der Ansprüche *11 bis 14*, **dadurch gekennzeichnet, dass** das werkzeugseitige Datenübertragungselement (120) in einer Aufnahme (124) im Bereich der planen Ringfläche (34) des Kupplungselements (32) des Maschinenwerkzeugs (36) angeordnet ist.

16. Werkzeugmaschine nach Anspruch 15, **dadurch gekennzeichnet, dass** das werkzeugseitige Datenübertragungselement (120) in Bezug auf die rückwärtige Fläche (34) zurückgesetzt angeordnet ist und/oder, dass die Aufnahme eine parallel zur Spindelachse (20) verlaufende Bohrung (124) ist.

17. Werkzeugmaschine nach einem der Ansprüche 1 bis *16*, **gekennzeichnet durch** mindestens zwei zwischen der Maschinenspindel (12) und dem Maschinenwerkzeug (36) angeordnete mitdrehende galvanische Kontaktstellen (125) für die elektrische Strom- oder Datenübertragung und/oder, dass das spindelseitige Kontaktelement (132) in einer austauschbaren Leiste (126) an der Maschinenspindel (12) aufgenommen ist und/oder, dass das werkzeugseitige Kontaktelement (142) in einer austauschbaren Leiste an dem Kupplungselement (32) des Maschinenwerkzeugs (36) aufgenommen ist und/oder, dass der mitdrehenden galvanischen Kontaktstelle (125) ein Auslass (143) für Blasluft zugeordnet ist und/oder, dass der mitdrehenden galvanischen Kontaktstelle (125) ein Heizelement für das Verdampfen von Fluid zugeordnet ist und/oder, dass das spindelseitige Kontaktelement (44) mit einem an oder in der Maschinenspindel (12) verlegten Spiralkabel (66) verbunden ist und/oder das werkzeugseitige Kontaktelement (46) mit einem an oder in dem Kupplungselement (32) des Maschinenwerkzeugs (36) verlegten Kabel, insbesondere einem Spiralkabel (72) verbunden ist und/oder, dass für das spindelseitige Kontaktelement (44) und/oder das werkzeugseitige Kontaktelement (46) eine Lagereinrichtung (90) vorgesehen ist, die wenigstens teilweise aus Teflon und/oder Silikon und/oder Gummi besteht und/oder, dass das werkzeugseitige Kontaktelement (342) in einer austauschbaren Haltevorrichtung (351) im Bereich der rückwärtigen Fläche (234) des Kupplungselements (232) aufgenommen ist, und/oder dass in einem rückwärtigen Abschnitt der Maschinenspindel (12) eine Schnittstelle (38,42,125) zur Übertragung von elektrischer Energie und/oder Daten in die Maschinenspindel (12) vorgesehen ist.

18. *Motorisch antreibbare Maschinenspindel (12,212),*
*die eine stimseitige Werkzeugaufnahme (28, 228) für ein in einer Werkzeugmaschine (10) gemäß einem der Ansprüche 1 bis 16 an der Maschinenspindel (12,212) auswechselbar angeordnetes Maschinenwerkzeug* (*36*) *aufweist, das ein mit der Werkzeugaufnahme* (*28, 228*) *der Maschinenspindel (12, 212) kompatibles Kupplungselement* (*32, 232*) *mit einer zu der Maschinenspindel weisenden rückwärtigen Fläche (34, 234) hat, und*
*mit einer an der Werkzeugaufnahme (28,228) ausgebildeten, der rückwärtigen Fläche (34) des Kupplungselements (32) gegenüberliegenden Stimfläche (30, 300),* umfassend
*ein an der Stimfläche (30, 300) der Werkzeugaufnahme angeordnetes spindelseitigen Kontaktelement (44, 32,348) für eine zwischen der Maschinenspindel (12,212) und dem Maschinenwerkzeug* (*36*) *angeordnete mitdrehende galvanische Kontaktstelle (38) für die elektrische Strom- und Datenübertragung,* ***dadurch gekennzeichnet*, *dass***
*das spindelseitige Kontaktelement (44,132,348) in einer einen spitzen Winkel mit der Spindelachse (201) einschließenden zu der Planfläche (30) der Maschinenspindel (12) hin offenen Schrägaufnahme (62, 70) angeordnet ist.*

19. *Maschinenwerkzeug für den Anschluss an die Maschinenspindel (12,212) einer gemäß einem der Ansprüche 1 bis 16 ausgebildeten Werkzeugmaschine (10), das ein mit einer stimseitigen Werkzeugaufnahme* (*28, 228) an der Maschinenspindel (12, 212) kompatibles Kupplungselement* (*32,232*) *mit einer rückwärtigen Fläche (34) hat, die bei Anschluss an die Maschinenspindel* (*12,212*) *zu der Maschinenspindel (12,212) weist,* umfassend
*ein an der rückwärtigen Fläche (34) des Kupplungselements (32) angeordnetes werkzeugseitiges Kontaktelement (46,142,342) für eine mitdrehende galvanische Kontaktstelle* (*38*) *für die elektrische Strom- und Datenübertragung zwischen der Maschinenspindel (12,212) und dem Maschinenwerkzeug (36), **dadurch gekennzeichnet, dass** das werkzeugseitige Kontaktelement (46) in einer Schrägaufnahme angeordnet ist, die bei Anschluss des Maschinenwerkzeugs an die Maschinenspindel (12) mit der Spindelachse einen spitzen Winkel einschließt.*

## Claims

1. Machine tool (10) having a motor-driven machine spindle (12, 212) which can be rotated about a spindle axis (20, 320) and has an end-side tool holder (28, 228), and having an inserted tool (36) which is arranged exchangeably on the machine spindle (12, 212) and has a coupling element (32, 232) which is compatible with the tool holder (28, 228) of the machine spindle (12, 212) and has a rear face (34, 234) which points to the machine spindle, and having an end face (30, 300) which is formed on the tool holder (28, 228) and lies opposite the rear face (34) of the coupling element (32), comprising at least one corotating galvanic contact point (38) for electric current or data transmission, which contact point (38) is arranged between the machine spindle (12, 212) and the inserted tool (36) and has a spindle-side contact element (44, 132, 348) which is arranged on the end face (30, 300) of the tool holder (28, 228) and a tool-side contact element (46, 142, 342) which is arranged on the rear face (34) of the coupling element (32), **characterized in that** the spindle-side contact element (44) and the tool-side contact element (46) is arranged in an inclined holder (62, 70) which encloses an acute angle with the spindle axis (20), it being possible for the spindle-side contact element (44) or the tool-side contact element (46) to be moved in a direction in which the spacing from the spindle axis (20) is increased and in which the tool-side or the spindle-side contact element (44, 46) is situated, such that the spindle-side contact element (44, 132, 348) and the tool-side contact element (46, 142, 342) are pressed against one another with the production of contact, under the action of a centrifugal force component which occurs during the rotation of the machine spindle (12, 212) about the spindle axis (20, 320).

2. Machine tool according to Claim 1, **characterized in that** the end face (30, 300) is a planar face and the inclined holder (62) for the spindle-side contact element (44) is open toward the planar face (30, 300).

3. Machine tool according to Claim 1 or 2, **characterized in that** the acute angle is from 5° to 45°, preferably approximately 20°, and/or **in that**, starting from the end face (30) of the machine spindle (12), the inclined holder (62) extends in a direction which points away from the spindle axis (20) and/or **in that** the inclined holder (62) is sealed with respect to the end face (30) of the machine spindle (12) against the penetration of liquid and dirt and/or **in that** the spindle-side contact element (44) is arranged rigidly in the machine spindle (12) and/or **in that** the spindle-side contact element (44) has a planar contact face with a spherical cap (47) as convex depression and/or in that the spindle-side contact element (44) is arranged set back in relation to the end face (30) of the machine spindle (12).

4. Machine tool according to one of Claims 1 to 3, **characterized in that** the tool-side contact element (46) is arranged in an inclined holder configured as an inclined guide (70) which is open toward the rear face (34) of the coupling element (32) and the spindle-side contact element (44) is fixed in the inclined holder (62) which is open towards the planar face (3a) of the machine spindle (12).

5. Machine tool according to Claim 4, **characterized in that** the inclined guide (70) is oriented in relation to the spindle axis (20) at an angle between 5° and 45°, preferably at an angle of approximately 20°, and/or **in that**, starting from the rear face (34) of the inserted tool (36), the inclined guide (70) extends in relation to the spindle axis (20) with a direction component which points toward the spindle axis (20) and/or **in that** the inclined guide (70) in the coupling element (32) is sealed in the region of the rear face (34) against the penetration of liquid and dirt.

6. Machine tool according to Claim 4 or 5, **characterized in that** the tool-side contact element (46) can be moved relative to the inclined guide (70).

7. Machine tool according to Claim 6, **characterized in that** the tool-side contact element is configured as a ball (46).

8. Machine tool according to Claim 7, **characterized in that** a spring element (84) which acts against the ball (46) in the direction of the spindle-side contact element (44) is arranged in the inclined guide (70).

9. Machine tool according to Claim 8, **characterized in that** the spring element is an elastic body, in particular a helical spring (84), and/or **in that** the spring element is an elastic ball (94) and/or **in that** the spring element is an elastomer body (100) which surrounds the ball (46) partially.

10. Machine tool according to one of Claims 1 to 9, **characterized in that** the rear face of the coupling element (32) is a planar annular face (34) which surrounds the coupling element (32), and the end face (30) of the tool holder (28) is configured as a planar face (30), against which the planar annular face (34) can be pressed during the coupling operation with the formation of a planar contact and /or **in that** the tool-side contact element is configured as a double contact (96) and/or **in that** the tool-side contact element (46) is arranged set back in relation to the rear side (34) of the coupling element (32).

11. Machine tool according to one of Claims 1 to 10, **characterized in that** a corotating connecting point (42) is provided for the data transmission between the machine spindle (12) and the inserted tool (36), which connecting point (42) has a spindle-side (118) and a tool-side data transmission element (120).

12. Machine tool according to Claim 11, **characterized in that** the connecting point (42) is designed for contactless data transmission and/or **in that** the connecting point (42) forms an inductive, capacitive, electromagnetic or optical transmission path and/or **in that** the corotating connecting point for the data transmission (125) is assigned an outlet (143) for blown air and/or **in that** the corotating connecting point for the data transmission is assigned a heating element for evaporating fluid.

13. Machine tool according to Claim 11 or 12, **characterized in that** the spindle-side data transmission element (118) is arranged in a holder (122) in the region of the planar face (30) of the tool holder (28) of the machine spindle (12).

14. Machine tool according to Claim 13, **characterized in that** the spindle-side data transmission element (118) is arranged set back in relation to the end face (30) of the tool holder (28) and/or **in that** the holder is a hole (122) which extends parallel to the spindle axis (20).

15. Machine tool according to one of Claims 11 to 14, **characterized in that** the tool-side data transmission element (120) is arranged in a holder (124) in the region of the planar annular face (34) of the coupling element (32) of the inserted tool (36).

16. Machine tool according to Claim 15, **characterized in that** the tool-side data transmission element (120) is arranged set back in relation to the rear face (34) and/or **in that** the holder is a hole (124) which extends parallel to the spindle axis (20).

17. Machine tool according to one of Claims 1 to 16, **characterized by** at least two corotating galvanic contact points (125) which are arranged between the machine spindle (12) and the inserted tool (36) for electric current or data transmission and/or in that the spindle-side contact element (132) is received in an exchangeable rail (126) on the machine spindle (12) and/or in that the tool-side contact element (142) is received in an exchangeable rail on the coupling element (32) of the inserted tool (36) and/or in that the corotating galvanic contact point (125) is assigned an outlet (143) for blown air and/or in that the corotating galvanic contact point (125) is assigned a heating element for evaporating fluid and/or in that the spindle-side contact element (44) is connected to a spiral cable (66) which is laid on or in the machine spindle (12) and/or the tool-side contact element (46) is connected to a cable, in particular a spiral cable (72), which is laid on or in the coupling element (32) of the inserted tool (36) and/or in that a bearing device (90) which is composed at least partially of Teflon and/or silicone and/or rubber is provided for the spindle-side contact element (44) and/or the tool-side contact element (46) and/or in that the tool-side contact element (342) is received in an exchangeable holding device (351) in the region of the rear face (234) of the coupling element (232) and/or in that an interface (38, 42, 125) for transmitting electric energy and/or data into the machine spindle (12) is provided in a rear section of the machine spindle (12).

18. Machine spindle (12, 212) which can be driven by motor and has an end-side tool holder (28, 228) for an inserted tool (36) which is arranged exchangeably on the machine spindle (12, 212) in a machine tool (10) according to one of Claims 1 to 16 and has a coupling element (32, 232) which is compatible with the tool holder (28, 228) of the machine spindle (12, 212) and has a rear face (34, 234) which points to the machine spindle, and having an end face (30, 300) which is formed on the tool holder (28, 228) and lies opposite the rear face (34) of the coupling element (32), comprising a spindle-side contact element (44, 132, 348) which is arranged on the end face (30, 300) of the tool holder for a corotating galvanic contact point (38) for electric current and data transmission, which contact point (38) is arranged between the machine spindle (12, 212) and the inserted tool (36), **characterized in that** the spindle-side contact element (44, 132, 348) is arranged in an inclined holder (62, 70) which is open towards the planar face (30) of the machine spindle (12) and encloses an acute angle with the spindle axis (201).

19. Inserted tool for connection to the machine spindle (12, 212) of a machine tool (10) which is configured according to one of Claims 1 to 16, which inserted tool has a coupling element (32, 232) which is compatible with an end-side tool holder (28, 228) on the machine spindle (12, 212)and has a rear face (34) which points to the machine spindle (12, 212) upon connection to the machine spindle (12, 212), comprising a tool-side contact element (46, 142, 342) for a corotating galvanic contact point (38) for electric current transmission and data transmission between the machine spindle (12, 212) and the inserted tool (36), which contact element (46, 142, 342) is arranged on the rear face (34) of the coupling element (32), **characterized in that** the tool-side contact element (46) is arranged in an inclined holder which encloses an acute angle with the spindle axis upon connection of the inserted tool to the machine spindle (12).

## Revendications

1. Machine-outil (10) dotée d'une broche de machine (12, 212) pouvant tourner autour d'un axe de broche (20, 320), présentant un logement d'outil côté frontal (28, 228) et entraînée par un moteur, et d'un outil d'usinage (36) disposé de façon échangeable sur la broche de machine (12, 212), lequel présente un élément de couplage (32, 232) compatible avec le logement d'outil (28, 228) de la broche de machine (12, 212) et doté d'une face arrière (34, 234) tournée vers la broche de machine, et d'une face frontale (30, 300) formée sur le logement d'outil (28, 228) et opposée à la face arrière (34) de l'élément de couplage (32), comprenant au moins un point de contact électrique (38) accompagnant la rotation et disposé entre la broche de machine (12, 212) et l'outil d'usinage (36) pour la transmission de courant électrique ou de données, qui présente un élément de contact côté broche (44, 132, 348) disposé sur la face frontale (30, 300) du logement d'outil (28, 228) et un élément de contact côté outil (46, 142, 342) disposé sur la face arrière (34) de l'élément de couplage (32), **caractérisée en ce que** l'élément de contact côté broche (44) et l'élément de contact côté outil (46) sont disposés dans un logement oblique (62, 70) formant un angle aigu avec l'axe de broche (20), dans laquelle l'élément de contact côté broche (44) ou l'élément de contact côté outil (46) est mobile dans une direction dans laquelle la distance par rapport à l'axe de broche (20) augmente et dans laquelle l'élément de contact côté outil ou l'élément de contact côté broche (44, 46) se trouve, de telle manière que l'élément de contact côté broche (44, 132, 348) et l'élément de contact côté outil (46, 142, 342) soient poussés l'un contre l'autre en formant un contact sous l'action d'une composante de force centrifuge apparaissant lors de la rotation de la broche de machine (12, 212) autour de l'axe de broche (20, 320).

2. Machine-outil selon la revendication 1, **caractérisée en ce que** la face frontale (30, 300) est une face plane et le logement oblique (62) pour l'élément de contact côté broche (44) est ouvert en direction de la face plane (30, 300).

3. Machine-outil selon la revendication 1 ou 2, **caractérisée en ce que** l'angle aigu vaut de 5° à 45°, de préférence environ 20°, et/ou **en ce que** le logement oblique (62) s'étend, à partir de la face frontale (30) de la broche de machine (12), dans une direction qui s'éloigne de l'axe de broche (20), et/ou **en ce que** le logement oblique (62) est rendu étanche par rapport à la face frontale (30) de la broche de machine (12) contre la pénétration de liquide et de souillures, et/ou **en ce que** l'élément de contact côté broche (44) est disposé de façon rigide dans la broche de machine (12), et/ou **en ce que** l'élément de contact côté broche (44) présente une face de contact plane avec une calotte (47) en guise de creux convexe, et/ou **en ce que** l'élément de contact côté broche (44) est disposé en retrait par rapport à la face frontale (30) de la broche de machine (12).

4. Machine-outil selon l'une quelconque des revendications 1 à 3, **caractérisée en ce que** l'élément de contact côté outil (46) est disposé dans un logement oblique formé dans un guidage oblique (70) ouvert en direction de la face arrière (34) de l'élément de couplage (32) et l'élément de contact côté broche (44) est calé dans le logement oblique (62) ouvert en direction de la face plane (3a) de la broche de machine (12).

5. Machine-outil selon la revendication 4, **caractérisée en ce que** le guidage oblique (70) est orienté par rapport à l'axe de broche (20) sous un angle compris entre 5° et 45°, de préférence sous un angle d'environ 20°, et/ou **en ce que** le guidage oblique (70) s'étend, à partir de la face arrière (34) de l'outil d'usinage (36) par rapport à l'axe de broche (20) avec une composante de direction dirigée vers l'axe de broche (20), et/ou **en ce que** le guidage oblique (70) dans l'élément de couplage (32) est rendu étanche, dans la région de la face arrière (34), contre la pénétration de liquide et de souillures.

6. Machine-outil selon la revendication 4 ou 5, **caractérisée en ce que** l'élément de contact côté outil (46) est mobile par rapport au guidage oblique (70).

7. Machine-outil selon la revendication 6, **caractérisée en ce que** l'élément de contact côté outil est réalisé sous forme de bille (46).

8. Machine-outil selon la revendication 7, **caractérisée en ce qu'**un élément de ressort (84) agissant contre la bille (46) en direction de l'élément de contact côté broche (44) est disposé dans le guidage oblique (70).

9. Machine-outil selon la revendication 8, **caractérisée en ce que** l'élément de ressort est un corps élastique, en particulier un ressort hélicoïdal (84), et/ou **en ce que** l'élément de ressort est une bille élastique (94), et/ou **en ce que** l'élément de ressort est un corps élastomère (100) enveloppant partiellement la bille (46).

10. Machine-outil selon l'une quelconque des revendications 1 à 9, **caractérisée en ce que** la face arrière de l'élément de couplage (32) est une face annulaire plane (34) entourant l'élément de couplage (32) et la face frontale (30) du logement d'outil (28) est formée par une face plane (30), contre laquelle la face annulaire plane (34) peut être pressée lors de l'opération de couplage en formant un appui plan, et/ou en ce que l'élément de contact côté outil est réalisé sous forme de double contact (96), et/ou **en ce que** l'élément de contact côté outil (46) est disposé en retrait par rapport à la face arrière (34) de l'élément de couplage (32).

11. Machine-outil selon l'une quelconque des revendications 1 à 10, **caractérisée en ce qu'**il est prévu un point de raccordement (42) accompagnant la rotation pour la transmission de données entre la broche de machine (12) et l'outil d'usinage (36), lequel présente un élément de transmission de données côté broche (118) et côté outil (120).

12. Machine-outil selon la revendication 11, **caractérisée en ce que** le point de raccordement (42) est conçu pour une transmission de données sans contact, et/ou **en ce que** le point de raccordement (42) forme une zone de transmission inductive, capacitive, électromagnétique ou optique, et/ou **en ce qu'**une sortie (143) pour de l'air de soufflage est associée au point de raccordement accompagnant la rotation pour la transmission de données (125), et/ou **en ce qu'**un élément chauffant pour la vaporisation de fluide est associé au point de raccordement accompagnant la rotation pour la transmission de données.

13. Machine-outil selon la revendication 11 ou 12, **caractérisée en ce que** l'élément de transmission de données côté broche (118) est disposé dans un logement (122) dans la région de la face plane (30) du logement d'outil (28) de la broche de machine (12).

14. Machine-outil selon la revendication 13, **caractérisée en ce que** l'élément de transmission de données côté broche (118) est disposé en retrait par rapport à la face frontale (30) du logement d'outil (28) et/ou **en ce que** le logement est un alésage (122) s'étendant parallèlement à l'axe de broche (20).

15. Machine-outil selon l'une quelconque des revendications 11 à 14, **caractérisée en ce que** l'élément de transmission de données côté outil (120) est disposé dans un logement (124) dans la région de la face annulaire plane (34) de l'élément de couplage (32) de l'outil d'usinage (36).

16. Machine-outil selon la revendication 15, **caractérisée en ce que** l'élément de transmission de données côté outil (120) est disposé en retrait par rapport à la face arrière (34) et/ou **en ce que** le logement est un alésage (124) s'étendant parallèlement à l'axe de broche (20).

17. Machine-outil selon l'une quelconque des revendications 1 à 16, **caractérisée par** au moins deux points de contact électrique (125) accompagnant la rotation et disposés entre la broche de machine (12) et l'outil d'usinage (36) pour la transmission de courant électrique ou de données, et/ou en ce que l'élément de contact côté broche (132) est logé dans une barrette échangeable (126) sur la broche de machine (12), et/ou en ce que l'élément de contact côté outil (142) est logé dans une barrette échangeable sur l'élément de couplage (32) de l'outil d'usinage (36), et/ou en ce qu'une sortie (143) pour de l'air de soufflage est associée au point de contact électrique (125) accompagnant la rotation, et/ou en ce qu'un élément chauffant pour la vaporisation de fluide est associé au point de contact électrique (125) accompagnant la rotation, et/ou en ce que l'élément de contact côté broche (44) est relié à un câble spiral (66) posé sur ou dans la broche de machine (12), et/ou en ce que l'élément de contact côté outil (46) est relié à un câble, en particulier à un câble spiral (72), posé sur ou dans l'élément de couplage (32) de l'outil d'usinage (36), et/ou en ce qu'il est prévu, pour l'élément de contact côté broche (44) et/ou l'élément de contact côté outil (46), un dispositif de palier (90), qui est composé au moins en partie de Téflon et/ou de silicone et/ou de caoutchouc, et/ou en ce que l'élément de contact côté outil (342) est logé dans un dispositif de maintien échangeable (351) dans la région de la face arrière (234) de l'élément de couplage (232), et/ou en ce qu'il est prévu, dans une partie arrière de la broche de machine (12), une interface (38, 42, 125) pour la transmission d'énergie électrique et/ou de données dans la broche de machine (12).

18. Broche de machine (12, 212) pouvant être entraînée par un moteur,
qui présente un logement d'outil côté frontal (28, 228) pour un outil d'usinage (36) disposé de façon échangeable sur la broche de machine (12, 212) dans une machine-outil (10) selon l'une quelconque des revendications 1 à 16, qui comprend un élément de couplage (32, 232) compatible avec le logement d'outil (28, 228) de la broche de machine (12, 212) avec une face arrière (34, 234) dirigée vers la broche de machine, et
avec une face frontale (30, 300) formée sur le logement d'outil (28, 228) et opposée à la face arrière (34) de l'élément de couplage (32), comprenant un élément de contact côté broche (44, 132, 348) disposé sur la face frontale (30, 300) du logement d'outil, pour un point de contact électrique (38) accompagnant la rotation disposé entre la broche de machine (12, 212) et l'outil d'usinage (36) pour la transmission de courant électrique et de données,
**caractérisée en ce que** l'élément de contact côté broche (44, 132, 348) est disposé dans un logement oblique (62, 70) ouvert en direction de la face plane (30) de la broche de machine (12) et formant un angle aigu avec l'axe de broche (201).

19. Outil d'usinage pour l'assemblage à la broche de machine (12, 212) d'une machine-outil (10) réalisée selon l'une quelconque des revendications 1 à 16, qui présente un élément de couplage (32, 232) compatible avec un logement d'outil côté frontal (28, 228) sur la broche de machine (12, 212) avec une face arrière (34), qui est dirigée vers la broche de machine (12, 212) lors de l'assemblage à la broche de machine (12, 212), comprenant un élément de contact côté outil (46, 142, 342) disposé sur la face arrière (34) de l'élément de couplage (32) pour un point de contact électrique (38) accompagnant la rotation pour la transmission de courant électrique et de données entre la broche de machine (12, 212) et l'outil d'usinage (36), **caractérisé en ce que** l'élément de contact côté outil (46) est disposé dans un logement oblique, qui forme un angle aigu avec l'axe de broche lors de l'assemblage de l'outil d'usinage sur la broche de machine (12).
